(19) Europäisches Patentamt
European Patent Office
Office européen des brevets

(11) EP 4 748 797 A2

(12) EUROPEAN PATENT APPLICATION

(43) Date of publication:
27.05.2026 Bulletin 2026/22

(51) International Patent Classification (IPC):
C01G 53/504 (2025.01)    C01G 53/84 (2025.01)
H01M 4/525 (2010.01)    H01M 10/0525 (2010.01)

(21) Application number: 25212518.2

(22) Date of filing: 30.10.2025

(52) Cooperative Patent Classification (CPC):
C01G 53/84; C01G 53/504; H01M 4/525;
H01M 10/0525; C01P 2004/61; C01P 2004/84;
C01P 2006/40

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 31.10.2024 KR 20240152461

(71) Applicant: SK On Co., Ltd.
Seoul 03161 (KR)

(72) Inventors:
• CHOI, Ji Hoon
34124 Daejeon (KR)
• KWEON, Hee Jun
34124 Daejeon (KR)
• JANG, Ji Hye
34124 Daejeon (KR)

(74) Representative: Stolmár & Partner
Patentanwälte PartG mbB
Blumenstraße 17
80331 München (DE)

(54) **CATHODE ACTIVE MATERIAL FOR LITHIUM SECONDARY BATTERY, METHOD FOR PREPARING THE SAME AND LITHIUM SECONDARY BATTERY**

(57) A cathode active material for a lithium secondary battery is provided, including a lithium metal oxide that satisfies Equation 1 below.

[Equation 1]

Charge transfer resistance $(R_{CT}) \leq 30 \, \Omega$

(in Equation 1, $R_{CT}$ is based on a value measured by electrochemical impedance spectroscopy (EIS) for a half-coin cell including a cathode to which the cathode active material is applied).

[FIG. 1]

```
Prepare preliminary lithium metal oxide ~S10
                    |
                    v
Treat lithium metal oxide with flake ice ~S20
```

EP 4 748 797 A2

**Description**

[BACKGROUND OF THE INVENTION]

1. Field of the Invention

The disclosure of the present application relates to a cathode active material for a lithium secondary battery, a method for preparing the same, and a lithium secondary battery including the cathode active material.

2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as electric vehicles.

Examples of the secondary battery may include a lithium secondary battery, a nickel-cadmium battery, a nickel-hydrogen battery and the like. Among them, the lithium secondary battery has a high operating voltage and a high energy density per unit weight, making it advantageous in terms of charging speed and weight reduction.

Lithium metal oxides are widely used as cathode materials for a lithium secondary battery.

Lithium metal oxides have a significant amount of residual lithium on their surfaces, and research and development are underway on washing processes to remove the residual lithium.

[SUMMARY OF THE INVENTION]

An object of the present disclosure is to provide a cathode active material for a lithium secondary battery having reduced residual lithium and improved electrical conductivity.

Another object of the present disclosure is to provide a method for preparing a cathode active material for a lithium secondary battery that achieves a reduced cathode material loss ratio and an improved removal rate of residual lithium.

Yet another object of the present disclosure is to provide a lithium secondary battery having improved capacity and cycle life properties.

A cathode active material for a lithium secondary battery is provided, including a lithium metal oxide that satisfies Equation 1 below.

[Equation 1]

$$\text{Charge transfer resistance } (R_{CT}) \leq 30 \ \Omega$$

In Equation 1, $R_{CT}$ is based on a value measured by an electrochemical impedance spectroscopy (EIS) for a half-coin cell including a cathode to which the cathode active material is applied.

In some embodiments, the cathode active material may further include a coating layer formed on at least a portion of a surface thereof, and the coating layer may include an inorganic material including at least one of a metal element, a metalloid element, and a non-metal element.

In some embodiments, the metal element may include at least one selected from the group consisting of aluminum, tungsten, cobalt, zirconium, molybdenum, niobium, and titanium, the metalloid element may include boron, and the non-metal element may include sulfur.

In some embodiments, a variation in a content of the inorganic material across an entire region of the coating layer may be less than 10%.

A method for preparing a cathode active material for a lithium secondary battery is provided, which includes: preparing a preliminary lithium metal oxide; and treating the preliminary lithium metal oxide with a flake ice.

In some embodiments, the preliminary lithium metal oxide may not be treated with water or steam.

In some embodiments, the flake ice may have an average crystal size of 0.05 mm to 0.5 mm.

In some embodiments, the treatment with the flake ice may be performed using 1 to 3 parts by weight of the flake ice based on 100 parts by weight of the preliminary lithium metal oxide.

In some embodiments, the treatment with the flake ice may be performed at a temperature range of -35°C to 35°C.

In some embodiments, the treatment with the flake ice may include introducing the preliminary lithium metal oxide and the flake ice into a blender and blending them.

In some embodiments, the treatment with the flake ice may include introducing the preliminary lithium metal oxide and the inorganic material in a blender and blending, followed by adding the flake ice and blending them.

In some embodiments, the inorganic material may include at least one of a metal element, a metalloid element, and a non-metal element.

In some embodiments, a blending time from the introduction of the preliminary lithium metal oxide and the inorganic material to the blender prior to the addition of the flake ice is 3 to 15 minutes.

In some embodiments, the inorganic material may be introduced into the blender in an amount of 1,000 ppm to 9,000 ppm per kg of the preliminary lithium metal oxide.

In some embodiments, the method for preparing a cathode active material for a lithium secondary battery may further include calcining the treated preliminary lithium metal oxide at least once to obtain a lithium metal oxide.

In some embodiments, a loss ratio (%) of the lithium metal oxide according to Equation 2 below may be less than 0.5%:

$$[\text{Equation 2}]$$

$$\text{Loss ratio (\%)} = \frac{A1 - A2}{A1} \times 100$$

In Equation 2, Al represents an amount of the lithium metal oxide upon completion of the calcination treatment, and A2 represents an amount of the lithium metal oxide classified by sieving the lithium metal oxide upon completion of the calcination treatment through a 325-mesh sieve.

A lithium secondary battery is provided, which includes: a cathode including the above-described cathode active material; and an anode disposed opposite to the cathode.

The cathode active material for a lithium secondary battery according to embodiments of the present disclosure may have improved electrical conductivity and a reduced amount of residual lithium present on the surface.

According to the method for preparing a cathode active material for a lithium secondary battery in accordance with embodiments of the present disclosure, the loss ratio of the cathode material may be reduced, and residual lithium present on the surface of the cathode active material may be sufficiently removed.

The lithium secondary battery according to embodiments of the present disclosure may achieve improved capacity properties and cycle life properties.

The cathode active material for a lithium secondary battery according to the present disclosure and lithium secondary batteries containing them may be widely applied in green technology fields, such as electric vehicles, battery charging stations, as well as solar power generation, wind power generation, and the like, which use the batteries. The cathode active material for a lithium secondary battery according to the present disclosure and lithium secondary batteries containing them may be used in eco-friendly electric vehicles, hybrid vehicles, and the like, which are aimed at mitigating climate change by reducing air pollution and greenhouse gas emissions.

[BRIEF DESCRIPTION OF THE DRAWINGS]

The above and other objects, features and other advantages of the present disclosure will be more clearly understood from the following detailed description taken in conjunction with the accompanying drawings, in which:

FIG. 1 is a schematic process flowchart of a method for preparing a cathode active material for a lithium secondary battery according to exemplary embodiments;
FIG. 2 is an exemplary image of flake ice;
FIG. 3 is a schematic plan view of a lithium secondary battery according to exemplary embodiments;
FIG. 4 is a schematic cross-sectional view of the lithium secondary battery according to exemplary embodiments; and
FIG. 5 is a Nyquist plot graph for half-coin cells to which the cathode active materials according to Example 1 and Comparative Example 1 are applied.

[DETAILED DESCRIPTION OF THE INVENTION]

**<Cathode active material for a lithium secondary battery>**

According to exemplary embodiments of the present disclosure, the cathode active material includes a lithium metal oxide. The lithium metal oxide may satisfy Equation 1 below, and thus, a cathode to which the cathode active material is applied may exhibit improved electrical conductivity and a reduced surface interfacial resistance.

[Equation 1]

$$\text{Charge transfer resistance } (R_{CT}) \leq 30 \; \Omega$$

In Equation 1, $R_{CT}$ is based on a value measured by electrochemical impedance spectroscopy (EIS) for a half-coin cell including a cathode to which the cathode active material is applied.

The $R_{CT}$ may be, for example, 29 $\Omega$ or less, 28 $\Omega$ or less, 27 $\Omega$ or less, or 20 $\Omega$ or more.

The cathode may be formed, for example, by applying a cathode slurry including the cathode active material to a cathode current collector and drying under reduced pressure or by drying and roll-pressing. Accordingly, the cathode may include a cathode current collector and a cathode active material layer.

The mass of the cathode active material layer per unit area of the cathode for which the $R_{CT}$ is measured may be 9 mg/cm$^2$ to 11 mg/cm$^2$, for example, 10 $\pm$ 0.5 mg/cm$^2$.

The compaction density of the cathode mixture for which the $R_{CT}$ is measured may be 3.4 g/cm$^3$ to 3.6 g/cm$^3$, that is, 3.5 $\pm$ 0.1 g/cm$^3$.

The total thickness of the cathode for which the $R_{CT}$ is measured may be 45 $\mu$m to 55 $\mu$m, for example, 48 $\mu$m to 52 $\mu$m, or 50 $\pm$ 1 $\mu$m.

The cathode current collector may include a metal foil, a metal plate, or the like. The metal foil or the metal plate may include, for example, a metal such as stainless steel, iron, aluminum, copper, germanium, nickel, titanium, or magnesium, or an alloy of two or more thereof.

The cathode slurry may further include, for example, at least one selected from the group consisting of a binder, a conductive material, and a solvent.

Non-limiting examples of the binder may include an organic binder such as vinylidene fluoride-hexafluoropropylene copolymer (PVDF-co-HFP), polyvinylidene fluoride (PVDF), polyacrylonitrile, polymethylmethacrylate, or an aqueous binder such as styrene-butadiene rubber (SBR). These may be used alone or in combination of two or more thereof. The binder may be used together with a thickener such as carboxymethyl cellulose (CMC), for example.

Non-limiting examples of the conductive material may include a fibrous conductive material, a particulate conductive material, or both of them. The fibrous conductive material may include, for example, carbon nanotubes (CNTs), and the CNTs may include single-walled carbon nanotubes (SWCNTs), double-walled carbon nanotubes (DWCNTs), multi-walled carbon nanotubes (MWCNTs), rope-shaped carbon nanotubes (rope CNTs), or the like.

The solvent may include, for example, N-methyl-2-pyrrolidone (NMP), dimethylformamide, dimethylacetamide, N,N-dimethylaminopropylamine, ethylene oxide, tetrahydrofuran, or the like.

The cathode slurry may include the cathode active material in an amount of 80% by weight ("wt%") to 98 wt% based on the total weight of the solids.

The cathode slurry may include the binder in an amount of, for example, 1 wt% to 10 wt%, or 1 wt% to 5 wt%, based on the total weight of the solids.

The cathode slurry may include the conductive material in an amount of, for example, 1 wt% to 10 wt%, or 1 wt% to 6 wt%, based on the total weight of the solids.

The total weight of the solids in the cathode slurry may be 65 wt% to 90 wt%.

The half-coin cell may include, for example, the cathode, a separation membrane, an anode, and an electrolyte. The separation membrane may be a porous separation membrane, such as a polyethylene-based separation membrane. The anode may be, for example, lithium metal, and the electrolyte may include, for example, a lithium salt.

For the half-coin cell, for example, at 100% state of charge (SOC), an AC voltage may be applied with an amplitude of 10 mV while varying the frequency from 10$^5$ Hz to 0.1 Hz, and the $R_{CT}$ may be measured by electrochemical impedance spectroscopy.

The voltage at 100% state of charge (SOC) of the half-coin cell may be, for example, 4.3 V.

In some embodiments, the lithium metal oxide may be represented by Formula 1 below.

[Formula 1]         $Li_xNi_aCo_bM_cO_y$

In Formula 1, M may be at least one of Al, Zr, Ti, B, Mg, Mn, Ba, Si, Y, W and Sr, and x, y, a, b and c may satisfy $0 < x \leq 1.1$, $2 \leq y \leq 2.02$, $0 \leq a \leq 1$, $0 \leq b \leq 1$, $0 \leq c \leq 1$, and $0 < a+b+c \leq 1$.

The chemical structure of Formula 1 indicates a bonding relationship between elements included in the layered structure or the crystal structure of the lithium metal oxide, and does not exclude the introduction of other additional elements.

For example, the lithium metal oxide may further include auxiliary elements to enhance the chemical stability of the active material or the layered structure/crystal structure. The auxiliary elements may be further incorporated into the layered structure/crystal structure to form bonds with the main elements, and it should be understood that this case is also included within the chemical structure range represented by Formula 1.

Non-limiting examples of the auxiliary elements may include one or more elements selected from the group consisting of, for example, Mn, Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr.

In some embodiments, the cathode active material may have a single particle form.

As used herein, the term "single particle" may refer to a single crystal particle without grain boundaries, and/or a particle formed by agglomeration of two to several dozen single crystal particles, for example, 20 or less, 10 or less, or 2 to 5. Such a single particle encompasses particles that appear to have 10 or fewer grain boundaries when observed using a scanning electron microscope (SEM) at a magnification of 4,000x to 20,000x.

The single particle is distinct from a secondary particle or a polycrystalline particle, which are aggregates formed by agglomeration of hundreds of single crystal particles.

The cathode active material in the single particle form has a smaller median particle diameter than the polycrystalline particles and a relatively larger amount of lithium remaining on the surface. Therefore, the physical properties of the final cathode active material may vary significantly depending on the washing method. The residual lithium may include, for example, lithium hydroxide (LiOH), lithium carbonate ($Li_2CO_3$), and the like.

According to exemplary embodiments, the cathode active material may be washed using flake ice, unlike methods such as water washing with water, steam washing, or non-water washing without using water. Accordingly, the cathode active material may be in a state in which residual lithium is effectively removed while preventing surface damage.

In some embodiments, the content of residual lithium present on the surface per kg of the lithium metal oxide may be less than 5,000 ppm. Accordingly, gelation and solidification of the slurry, swelling of the battery, and gas generation due to side reactions between the residual lithium and the electrolyte may be suppressed or reduced.

The content of residual lithium present on the surface of the lithium metal oxide may be, for example, 4,500 ppm or less, 3,000 ppm or less, or 2,400 ppm or less.

As a non-limiting example, the content of residual lithium present on the surface per kg of the lithium metal oxide may be 1,000 ppm or more.

In some embodiments, the content of LiOH present on the surface of the lithium metal oxide may be, for example, 500 ppm to 2,000 ppm.

In some embodiments, the content of $Li_2CO_3$ present on the surface of the lithium metal oxide may be, for example, 500 ppm to 2,000 ppm.

In some embodiments, the lithium metal oxide further includes a coating layer formed on at least a portion of the surface thereof, wherein the coating layer may include an inorganic material including at least one of a metal element, a metalloid element, and a non-metal element.

The inorganic material may be, for example, an oxide, a hydroxide, or the like including the above-described elements.

In some embodiments, the metal element may include aluminum, tungsten, cobalt, zirconium, molybdenum, niobium and/or titanium, the metalloid element may include boron, and the non-metal element may include sulfur.

In one embodiment, the inorganic material may include tungsten, for example, tungsten oxide. The tungsten oxide may include, for example, $WO_3$.

Therefore, the electrical conductivity of the cathode active material may be further improved.

In one embodiment, the inorganic material may include, for example, amorphous $Al_2O_3$, lithium-aluminum oxide, AlOOH, $Al(OH)_3$, amorphous lithium-boron oxide, LiBO, $Li_2BO_2$, $Li_2B_4O_7$, $Li_4BO_3$, CoOOH, $Nb_2O_5$, and the like.

In some embodiments, the variation in the inorganic material content across the entire region of the coating layer may be less than 10%. The content of the inorganic material may be measured using energy-dispersive X-ray spectroscopy (EDS). The peak intensity of the inorganic material may be measured from the EDS spectrum, and the difference between the highest peak intensity and the lowest peak intensity may be calculated as a percentage based on the average peak intensity. The value calculated from this may be defined as the variation.

In one embodiment, the variation in the content of inorganic materials, including tungsten, across the entire coating layer may be less than 10%. This variation may be, for example, a percentage calculated based on the difference between the highest peak intensity and the lowest peak intensity based on the average peak intensity of $WO_3$ in an EDS spectrum.

The variation in the inorganic material content may be, for example, 9% or less, or 8% or less, with a lower limit being preferably as small as possible.

In some embodiments, the cathode active material may include 1,000 ppm to 9,000 ppm, or 2,000 ppm to 6,000 ppm of inorganic materials per kg of the lithium metal oxide. Accordingly, the cathode active material may be more stable.

The specific surface area of the lithium metal oxide may be, for example, 0.05 $m^2$/g or more. In this case, smooth lithium-ion mobility may be ensured.

The lithium metal oxide in the single particle form may have a median particle diameter of, for example, 1 $\mu$m to 9 $\mu$m, 1 $\mu$m to 7 $\mu$m, or 2 $\mu$m to 4 $\mu$m. The median particle diameter may refer to $D_{50}$.

The coating layer may have a thickness of, for example, 10 nm to 200 nm, or 20 nm to 100 nm.

### <Method for preparing a cathode active material for a lithium secondary battery>

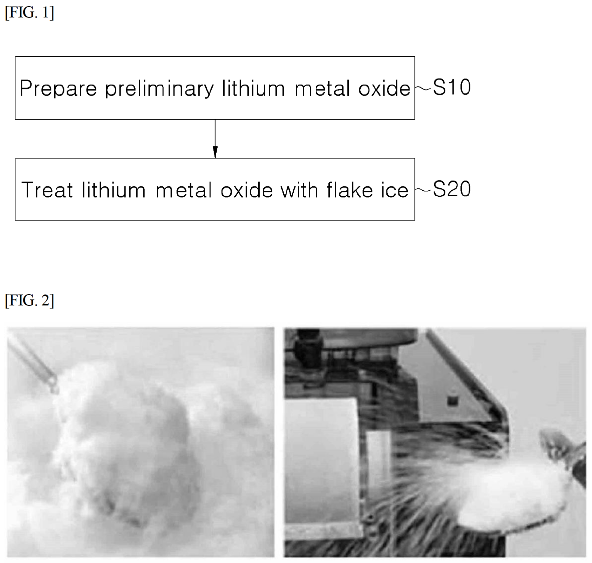

FIG. 1 is a schematic process flowchart of a method for preparing a cathode active material for a lithium secondary battery according to exemplary embodiments.

The method for preparing a cathode active material for a lithium secondary battery according to exemplary embodiments includes preparing a preliminary lithium metal oxide (S10) and treating the preliminary lithium metal oxide with flake ice (S20). Accordingly, surface residual lithium may be effectively removed without damaging the surface of the preliminary lithium metal oxide, and the loss ratio of the preliminary lithium metal oxide (hereinafter, also abbreviated as "cathode material") during the preparation process may be reduced.

In the method for preparing a cathode active material according to exemplary embodiments, the preliminary lithium metal oxide may not be treated with water or steam.

In some embodiments, the preliminary lithium metal oxide may have a single particle form.

Since the cathode active material of a single particle form has a relatively small median particle diameter, washing with water during the preparation process or using a non-water-washing method with a small amount of water and high-speed rotation may increase the cathode material loss ratio and cause greater surface damage.

In addition, the cathode active material of a single particle form may contain a relatively large amount of residual lithium. Therefore, when washing with steam or using a dry-coating method during the preparation process, the residual lithium may not be sufficiently removed.

FIG. 2 is an exemplary image of flake ice. The flake ice may refer to thinly shaved ice and may be prepared using a flake-type ice maker. As a non-limiting example, the flake ice may be prepared using a machine such as the Snow Flake Ice Machine (NSD-151MW) from Nakanzo International.

In some embodiments, the flake ice may have an average crystal size of 0.05 mm to 0.5 mm. The average crystal size of the flake ice may refer to, for example, the average of the maximum and minimum diameters passing through the center of the flake ice crystal. As a non-limiting example, the average crystal size of the flake ice may be measured using an optical microscope or the like.

The flake ice may have an average thickness of, for example, 0.1 mm or more.

In some embodiments, the treatment with the flake ice may be performed using 1 to 3 parts by weight ("wt parts") of the flake ice based on 100 wt parts of the preliminary lithium metal oxide. Accordingly, residual lithium on the surface of the preliminary lithium metal oxide may be sufficiently removed, and lithium leakage within the layered structure may be prevented. In addition, after completion of the treatment with the flake ice, the amount of water (e.g., moisture content) contained in the preliminary lithium metal oxide may be reduced compared to a case in which a washing method using water or steam is applied.

In some embodiments, the treatment with flake ice may be performed at a temperature range of - 35°C to 35°C, or 5°C to 25°C. Accordingly, the treatment of the preliminary lithium metal oxide may be performed smoothly.

In some embodiments, the preliminary lithium metal oxide and the flake ice may be introduced into a blender and blended to treat the preliminary lithium metal oxide with the flake ice. Non-limiting examples of the blender may include a drum blender, a V blender, a bin blender, a ribbon blender, a twinscrew blender, and the like.

For example, the preliminary lithium metal oxide may be introduced into the blender, and then the flake ice may be added thereto. The blender may be operated prior to the introduction of these components or simultaneously with the addition of the flake ice.

The first blending of the preliminary lithium metal oxide and the flake ice may be performed at a rotation speed of 60 rpm to 600 rpm. Accordingly, surface damage may be suppressed while preventing agglomeration of the preliminary lithium metal oxide.

The method for preparing a cathode active material according to exemplary embodiments, unlike washing using a non-water-based method, does not require high-speed blending, thereby suppressing surface damage to the preliminary lithium metal oxide and preventing the generation of fine particles.

In some embodiments, the first blending may be performed for 3 to 15 minutes. This prevents changes in the crystal structure of the preliminary lithium metal oxide and effectively removes surface residual lithium.

In some embodiments, the preliminary lithium metal oxide and the inorganic material may be introduced into the blender and blended, followed by adding the flake ice and blending them.

The preliminary lithium metal oxide and the inorganic material may be introduced into the blender simultaneously or sequentially.

The second blending, which blends the preliminary lithium metal oxide and the inorganic material prior to the addition of the flake ice, may be performed at a rotation speed of 1,000 to 2,000 rpm, for example.

The third blending, which blends the preliminary lithium metal oxide, the inorganic material, and the flake ice, may be performed at a rotation speed of, for example, 60 to 600 rpm.

In some embodiments, the inorganic material may include at least one of a metallic element, a metalloid element, and a non-metallic element. The inorganic material may be as described above herein.

In some embodiments, the inorganic material may be introduced into the blender in an amount of 2,000 to 6,000 ppm per kg of the preliminary lithium metal oxide.

In some embodiments, the blending time (i.e., the second blending time), from the introduction of the preliminary lithium metal oxide and the inorganic material to the blender prior to the addition of the flake ice, may be 3 to 15 minutes. This may stabilize the crystal structure and surface of the preliminary lithium metal oxide.

In some embodiments, the third blending time may be the same as the first blending time.

The method for preparing a cathode active material according to exemplary embodiments may obtain a lithium metal oxide by calcining the treated preliminary lithium metal oxide at least once.

The treated preliminary lithium metal oxide may be calcined, for example, once, twice, or three times.

The treated preliminary lithium metal oxide may be placed in a calcination furnace and subjected to heat treatment, for example, under an oxygen atmosphere, for calcination.

As a non-limiting example, the calcination may be performed at 200°C to 600°C for 2 to 7 hours.

In some embodiments, the loss ratio (%) of the lithium metal oxide according to Equation 2 below may be less than 0.5%.

$$[\text{Equation 2}]$$

$$\text{Loss ratio (\%)} = \frac{A1 - A2}{A1} \times 100$$

In Equation 2, Al represents the amount of lithium metal oxide upon completion of the calcination treatment, and A2 represents the amount of lithium metal oxide classified by sieving the lithium metal oxide upon completion of the calcination treatment through a 325-mesh sieve.

Therefore, the method for preparing a cathode active material according to exemplary embodiments may further reduce the degree of cathode material loss.

For example, the loss ratio (%) of lithium metal oxide may be 0.4% or less, or 0.3% or less, with a lower limit being preferably as small as possible.

The lithium metal oxide upon completion of the calcination treatment may be sieved through a 325-mesh sieve to obtain classified lithium metal oxide, which may be used as a cathode active material for a lithium secondary battery.

The above-described conventional washing method may cause agglomeration of the preliminary lithium metal oxide during the washing process, or the water may not be sufficiently drained during the sieving process, resulting in a partially doughy state. Consequently, the amount of lithium metal oxide remaining on the sieve is relatively high.

The method for preparing a cathode active material according to exemplary embodiments includes sieving the lithium metal oxide upon completion of the calcination treatment through a mesh sieve to obtain a classified lithium metal oxide.

The mesh sieve may be, for example, a 325-mesh sieve.

<Lithium secondary battery>

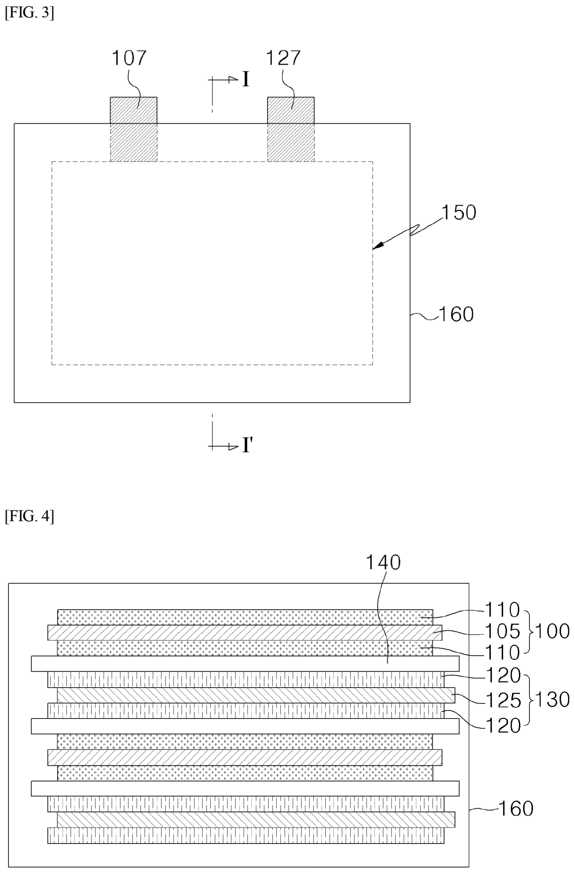

FIG. 3 is a schematic plan view of a lithium secondary battery according to exemplary embodiments, and FIG. 4 is a schematic cross-sectional view of the lithium secondary battery according to exemplary embodiments.

The lithium secondary battery according to exemplary embodiments includes a cathode 100 including the above-described cathode active material for a lithium secondary battery and an anode disposed opposite to the cathode 100. Accordingly, the lithium secondary battery may achieve improved capacity properties and cycle life properties.

The cathode 100 may be as described above herein. The cathode 100 may include a cathode current collector 105 and a cathode active material layer 110 disposed on at least one surface of the cathode current collector 105. For example, the cathode 100 may include a structure in which the cathode active material layer 110 is laminated on the cathode current collector 105.

In some embodiments, the mass of the cathode active material layer 110 per unit area of the cathode 100 may be 8.0 mg/cm$^2$ to 13.0 mg/cm$^2$, 9.0 mg/cm$^2$ to 11.0 mg/cm$^2$, or 9.5 mg/cm$^2$ to 10.5 mg/cm$^2$.

In some embodiments, the compaction density of the cathode 100 mixture may be 3.0 g/cm$^3$ to 3.8 g/cm$^3$, for example, 3.4 g/cm$^3$ to 3.6 g/cm$^3$.

In some embodiments, the cathode current collector 105 may have a thickness of, for example, 10 $\mu$m to 30 $\mu$m, or 10 $\mu$m to 20 $\mu$m.

In some embodiments, the thickness of the cathode active material layer 110 may be, for example, 30 $\mu$m to 70 $\mu$m, 40 $\mu$m to 60 $\mu$m, or 45 $\mu$m to 55 $\mu$m.

The anode 130 may include an anode current collector 125 and an anode active material layer 120 disposed on one or both surfaces of the anode current collector 125.

The anode current collector 125 may include, for example, a copper foil, a nickel foil, a stainless steel foil, a titanium foil, a nickel foam, a copper foam, a polymer substrate coated with a conductive metal and the like. The anode current collector 125 may have a thickness of, for example, 10 μm to 50 μm.

The anode active material layer 120 may include an anode active material. The anode active material may include, for example, carbon-based materials such as crystalline carbon, amorphous carbon, carbon composites, or carbon fibers, etc.; lithium metal; a lithium alloy; a silicon (Si)-containing material, or a tin (Sn)-containing material. These may be used alone or in combination of two or more thereof.

The amorphous carbon may include hard carbon, soft carbon, coke, mesocarbon microbead (MCMB), mesophase pitch-based carbon fiber (MPCF) or the like.

The crystalline carbon may include graphite-based carbon such as natural graphite, artificial graphite, graphitized coke, graphitized MCMB, graphitized MPCF or the like.

The lithium metal may include pure lithium metal and/or lithium metal having a protective layer formed thereon for suppressing dendrite growth and the like.

Elements contained in the lithium alloy may include aluminum, zinc, bismuth, cadmium, antimony, silicon, lead, tin, gallium, indium, etc. These may be used alone or in combination of two or more thereof.

The silicon-containing material may include Si, $SiO_x$ (0<x<2), metal-doped $SiO_x$ (0<x<2), or a silicon-carbon composite, etc.

The metal may include lithium and/or magnesium, and the metal-doped $SiO_x$ (0<x<2) may include a metal silicate.

In exemplary embodiments, a separation membrane 140 may be interposed between the cathode 100 and the anode 130. The separation membrane 140 may be configured to prevent an electrical short-circuit between the cathode 100 and the anode 130, and to allow the flow of ions. For example, the separation membrane may have a thickness of 10 μm to 20 μm.

For example, the separation membrane 140 may include a porous polymer film or a porous nonwoven fabric.

The porous polymer film may include a polyolefin-based polymer such as an ethylene polymer, a propylene polymer, an ethylene/butene copolymer, an ethylene/hexene copolymer, and an ethylene/methacrylate copolymer, etc. These may be used alone or in combination of two or more thereof.

The porous nonwoven fabric may include glass fibers having a high melting point, polyethylene terephthalate fibers, etc.

The separation membrane 140 may also include a ceramic-based material. For example, inorganic particles may be coated on the polymer film or dispersed within the polymer film to improve heat resistance.

The separation membrane 140 may have a single-layer or multi-layer structure including the above-described polymer film and/or non-woven fabric.

According to exemplary embodiments, an electrode cell may be defined by the cathode 100, the anode 130 and the separation membrane 140, and a plurality of electrode cells may be stacked to form, for example, a jelly roll type electrode assembly 150. For example, the electrode assembly 150 may be formed by winding, stacking, z-folding, or stack-folding the separation membrane 140.

The electrode assembly 150 may be accommodated in a case 160 together with the electrolyte solution to define a lithium secondary battery. According to exemplary embodiments, a non-aqueous electrolyte may be used as the electrolyte.

The non-aqueous electrolyte may include a lithium salt of an electrolyte and an organic solvent. For example, the lithium salt may be represented by $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfoxide, acetonitrile, diethoxyethane, sulfolane, gamma-butyrolactone, propylene sulfite, and the like may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like. These may be used alone or in combination of two or more thereof.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluoro phosphate, etc.

The borate compound may include lithium bis(oxalate) borate, etc.

In some embodiments, a solid electrolyte may be used in place of the above-described non-aqueous electrolyte. In this case, the lithium secondary battery may be manufactured in the form of an all-solid-state battery. In addition, a solid electrolyte layer may be disposed between the cathode 100 and the anode 130 in place of the above-described separation membrane 140.

The solid electrolyte may include a sulfide-based electrolyte. As a non-limiting example, the sulfide-based electrolyte may include $Li_2S-P_2S_5$, $Li_2S-P_2S_5-LiCl$, $Li_2S-P_2S_5-LiBr$, $Li_2S-P_2S_5-LiCl-LiBr$, $Li_2S-P_2S_5-Li2O$, $Li_2S-P_2S_5-Li_2O$-LiI, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n are positive numbers, Z is Ge, Zn or Ga), $Li_2S-GeS_2$, $Li_2S-SiS_2-Li_3PO_4$, $Li_2S-SiS_2-Li_pMO_q$ (p and q are positive numbers, M is P, Si, Ge, B, Al, Ga or In), $Li_7-xPS_6-xCl_x$ ($0 \le x \le 2$), $Li_7-xPS_6-xBr_x$ ($0 \le x \le 2$), $Li_7-xPS_6-xI_x$ ($0 \le x \le 2$), etc. These may be used alone or in combination of two or more thereof.

In one embodiment, the solid electrolyte may include an oxide-based amorphous solid electrolyte, such as, for example, $Li_2O-B_2O_3-P_2O_5$, $Li_2O-SiO_2$, $Li_2O-B_2O_3$, $Li_2O-B_2O_3-ZnO$, etc.

As shown in FIGS. 3 and 4, electrode tabs (cathode tabs and anode tabs) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) that extend or are exposed to the outside of the case 160.

The lithium secondary battery may be manufactured, for example, in a cylindrical shape using a can, a prismatic shape, a pouch shape or a coin shape.

The invention is also defined by the following aspects:

Aspect 1. A cathode active material for a lithium secondary battery comprising a lithium metal oxide,

wherein the lithium metal oxide satisfies Equation 1 below:

[Equation 1]

$$\text{Charge transfer resistance } (R_{CT}) \le 30 \ \Omega$$

(in Equation 1, $R_{CT}$ is based on a value measured by electrochemical impedance spectroscopy (EIS) for a half-coin cell comprising a cathode to which the cathode active material is applied).

Aspect 2. The cathode active material for a lithium secondary battery according to aspect 1, wherein the cathode active material further comprises a coating layer formed on at least a portion of the surface thereof, and the coating layer comprises an inorganic material comprising at least one of a metal element, a metalloid element, and a non-metal element.

Aspect 3. The cathode active material for a lithium secondary battery according to aspect 2, wherein the metal element comprises at least one selected from the group consisting of aluminum, tungsten, cobalt, zirconium, molybdenum, niobium, and titanium, the metalloid element comprises boron, and the non-metal element comprises sulfur.

Aspect 4. The cathode active material for a lithium secondary battery according to any one of aspects 2 and 3, wherein the variation in the content of the inorganic material across the entire region of the coating layer is less than 10%.

Aspect 5. A method for preparing a cathode active material for a lithium secondary battery, comprising:

preparing a preliminary lithium metal oxide; and
treating the preliminary lithium metal oxide with flake ice.

Aspect 6. The method for preparing a cathode active material for a lithium secondary battery according to aspect 5, wherein the preliminary lithium metal oxide is not treated with water or steam.

Aspect 7. The method for preparing a cathode active material for a lithium secondary battery according to any one of aspects 5 and 6, wherein the flake ice has an average crystal size of 0.05 mm to 0.5 mm.

Aspect 8. The method for preparing a cathode active material for a lithium secondary battery according to any one of aspects 5 to 7, wherein the treatment with the flake ice is performed using 1 to 3 parts by weight of the flake ice based on 100 parts by weight of the preliminary lithium metal oxide.

Aspect 9. The method for preparing a cathode active material for a lithium secondary battery according to any one of aspects 5 to 8, wherein the treatment with the flake ice is performed at a temperature range of -35°C to 35°C.

Aspect 10. The method for preparing a cathode active material for a lithium secondary battery according to any one of aspects 5 to 9, wherein the treatment with flake ice comprises introducing the preliminary lithium metal oxide and the flake ice into a blender and blending them, or

wherein the treatment with flake ice comprises introducing the preliminary lithium metal oxide and the inorganic material in a blender and blending them, followed by adding the flake ice and blending them.

Aspect 11. The method for preparing a cathode active material for a lithium secondary battery according to aspect 10, wherein the time for blending the preliminary lithium metal oxide and the flake ice, from the introduction of the preliminary lithium metal oxide and the inorganic material to the blender prior to the addition of the flake ice, is 3 to 15 minutes.

Aspect 12. The method for preparing a cathode active material for a lithium secondary battery according to any one of aspects 10 and 11, wherein the inorganic material is introduced into the blender in an amount of 1,000 ppm to 9,000 ppm per kg of the preliminary lithium metal oxide.

Aspect 13. The method for preparing a cathode active material for a lithium secondary battery according to any one of aspects 5 to 12, further comprising calcining the treated preliminary lithium metal oxide at least once to obtain a lithium metal oxide.

Aspect 14. The method for preparing a cathode active material for a lithium secondary battery according to aspect 13, wherein the loss ratio (%) of lithium metal oxide according to Equation 2 below is less than 0.5%:

[Equation 2]

$$\text{Loss ratio } (\%) = \frac{A1 - A2}{A1} \times 100$$

(in Equation 2, Al represents the amount of lithium metal oxide upon completion of the calcination treatment, and A2 represents the amount of lithium metal oxide classified by sieving the lithium metal oxide upon completion of the calcination treatment through a 325-mesh sieve).

Aspect 15. A lithium secondary battery comprising:

a cathode comprising the cathode active material for a lithium secondary battery according to any one of aspects 1 to 14; and

an anode disposed opposite to the cathode.

## Example 1

Preparation of preliminary lithium metal oxide

$NiSO_4$, $CoSO_4$, and $MnSO_4$ were added and mixed at a molar ratio of 6:1:3 in distilled water from which dissolved oxygen had been removed by bubbling $N_2$ through it for 24 hours. The mixed solution was then placed in a reactor at 50°C, and a co-precipitation reaction was performed for 48 hours using NaOH and $NH_3 \cdot H_2O$ as a precipitant and a chelating agent, to obtain a transition metal precursor. The median particle diameter ($D_{50}$) of the obtained transition metal precursor was 3 $\mu$m and the chemical formula was $Ni_{0.6}Co_{0.1}Mn_{0.3}(OH)_2$.

The transition metal precursor was dried at 80°C for 12 hours and then further dried at 110°C for an additional 12 hours.

Lithium carbonate and the transition metal precursor were introduced into a blender at a ratio of 1.05:1 and mixed for 5 minutes. The resulting mixture was placed in a calcination furnace under an oxygen atmosphere, heated to 850°C at a heating rate of 2°C/min, and calcined at 850°C for 10 hours. Oxygen was continuously supplied to the calcination furnace at a flow rate of 20 mL/min during the heating and calcination.

The calcination furnace was then naturally cooled to room temperature, and the calcined product was pulverized by a jet-mill and classified to obtain a preliminary lithium metal oxide of a single particle form (median particle diameter ($D_{50}$): 3 $\mu$m), represented by $LiNi_{0.6}Co_{0.1}Mn_{0.3}O_2$.

Formation and washing of inorganic coating layer

The preliminary lithium metal oxide and tungsten oxide ($WO_3$) powder were blended in a blender for 10 minutes. The amount of tungsten oxide ($WO_3$) powder added was 4,000 ppm per kg of the preliminary lithium metal oxide.

After mixing the preliminary lithium metal oxide and tungsten oxide ($WO_3$) powder for 10 minutes, 2.04 wt parts of flake ice were added based on 100 wt parts of the preliminary lithium metal oxide. The flake ice was prepared using the Snow Flake Ice Machine (NSD-151MW) from Nakanzo International.

The preliminary lithium metal oxide, the tungsten oxide ($WO_3$) powder, and the flake ice were blended at 25°C for 10 minutes.

The washed preliminary lithium metal oxide was placed in a calcination furnace under an oxygen atmosphere, heated to 400°C at a heating rate of 2°C/min, and calcined at 400°C for 5 hours.

The lithium metal oxide upon completion of the calcination treatment was sieved using a 325-mesh sieve to obtain classified lithium metal oxide.

At this time, the loss ratio (%) of lithium metal oxide was calculated based on the amount of lithium metal oxide upon completion of the calcination treatment and the amount of lithium metal oxide remaining on the sieve.

Example 2

Lithium metal oxide was obtained in the same manner as in Example 1, except that cobalt oxyhydroxide (CoOOH) was used instead of tungsten oxide ($WO_3$) powder.

Example 3

Lithium metal oxide was obtained in the same manner as in Example 1, except that niobium oxide ($Nb_2O_5$) was used instead of tungsten oxide ($WO_3$) powder.

Comparative Example **1**

Lithium metal oxide was obtained in the same manner as in Example 1, except that flake ice was not added.

Comparative Example 2

Lithium metal oxide was obtained in the same manner as in Example 1, except that flake ice was not added and that the preliminary lithium metal oxide was treated with a steam-containing gas to form an inorganic coating as described below.

<Washing with steam>

The prepared preliminary lithium metal oxide was placed in the calcination furnace, and the internal temperature of the furnace was set to 300°C. Oxygen gas was supplied into the calcination furnace at a flow rate of 100 mL/min through a water source (distilled water provided in a tank).

The oxygen gas was converted into a water-containing gas as it passed through the tank. The water-containing gas was then introduced into the calcination furnace and converted into a steam-containing gas, thereby performing a steam treatment on the preliminary lithium metal oxide loaded into the calcination furnace.

After the steam treatment was performed for 6 hours, the product was dried at 80°C for 1 hour to obtain a washed preliminary lithium metal oxide.

At this time, the amount of steam introduced into the calcination furnace was 1.01 wt parts based on 100 wt parts of the preliminary lithium metal oxide.

<Formation of inorganic coating layer>

The washed preliminary lithium metal oxide and tungsten oxide ($WO_3$) powder were added to a dry high-speed mixer in an amount of 800 ppm and mixed for 5 minutes. The resulting mixture was then placed in a calcination furnace under an oxygen atmosphere, heated to 400°C at a heating rate of 2°C/min, and calcined at 400°C for 5 hours.

The lithium metal oxide upon completion of the calcination treatment was sieved through a 325-mesh sieve to obtain classified lithium metal oxide.

Comparative Example 3

Lithium metal oxide was obtained in the same manner as in Example 1, except that a small amount of liquid water was added instead of flake ice.

At this time, the amount of liquid water added to the blender was 7.53 wt parts based on 100 wt parts of the preliminary lithium metal oxide.

Comparative Example **4**

Lithium metal oxide was obtained in the same manner as in Example 1, except that flake ice was not added and the preliminary lithium metal oxide was washed with liquid water and then an inorganic coating was formed, as described below.

<Washing with water>

1 kg of the preliminary lithium metal oxide was added to a reactor filled with 1 kg of distilled water and stirred for 10 minutes to obtain a slurry. The resulting slurry was filtered through a reduced pressure flask and dried in a vacuum oven at 180°C for 12 hours to obtain the washed preliminary lithium metal oxide.

<Formation of inorganic coating layer>

The washed preliminary lithium metal oxide and tungsten oxide ($WO_3$) powder were mixed for 10 minutes. The resulting mixture was placed in a calcination furnace under an oxygen atmosphere, heated to 400°C at a heating rate of 2°C/min, and calcined at 400°C for 5 hours.

The lithium metal oxide upon completion of the calcination treatment was sieved through a 325-mesh sieve to obtain classified lithium metal oxide.

**Experimental Example**

<Fabrication of cathode>

Cathodes were fabricated using the lithium metal oxides (hereinafter referred to as "cathode active materials") prepared in Examples 1 to 3 and Comparative Examples 1 to 4, as follows.

A mixture was prepared by mixing the cathode active material, a carbon-based conductive material (Denka Black), and polyvinylidene fluoride (PVdF) at a weight ratio of 96:2:2 (total mass 10 g).

The mixture and N-methylpyrrolidone were added to a mixer (THINKY MIXER, ARE-310) and mixed to prepare a cathode active material slurry.

The cathode active material slurry was applied to an aluminum foil having a thickness of 20 $\mu$m by bar coating, dried at room temperature, and then further dried at 120°C under vacuum conditions. The cathode was then roll-pressed and punched ($\varphi$14) to fabricate a cathode.

The thickness, length, and width of the fabricated cathode were measured using a micrometer to calculate the volume, and the compaction density of the cathode mixture was measured using the weight of the cathode active material layer.

The electrochemical impedance spectroscopy spectrum of the half-coin cell is influenced by the following three physical properties of the cathode. Therefore, the cathodes fabricated according to the above-described examples and comparative examples were fabricated to ensure that these properties were identical.

- Mass of cathode active material layer per unit area of cathode (loading amount): $10 \pm 0.5$ (mg/cm$^2$)
- Total thickness of cathode: $50 \pm 2$ $\mu$m (current collector approximately 20 $\mu$m, cathode active material layer approximately 30 $\mu$m)
- Compaction density of cathode mixture: $3.5 \pm 0.1$ (g/cm$^3$)

<Manufacture of half-coin cell>

Lithium metal having a thickness of 1.2 mm was prepared as an anode.

The fabricated cathode and anode were notched into circular shapes having diameters of $\Phi$14 and $\Phi$16, respectively, and laminated with a porous separation membrane (polyethylene, thickness: 13 $\mu$m) notched into $\Phi$19 interposed between the cathode and the anode to form an electrode cell.

The electrode cell was placed in an outer case having a diameter of 20 mm and a height of 3.2 mm, followed by electrolyte injection and assembly to manufacture a half-coin cell battery (CR2032). Thereafter, aging was carried out for 12 hours to allow the electrolyte to impregnate into the electrode cell. A 1M LiPF$_6$ solution prepared using a mixed solvent of EC/EMC (30/70; volume ratio) was used as the electrolyte.

Experimental Example 1: Evaluation of initial charge/discharge capacities and capacity retention

The charge/discharge capacities of the half-coin cells were evaluated using a charge/discharge tester (manufacturer: TOYO, model: TOYO-3100).

The half-coin cells manufactured as described above were left for 24 hours, and after the open-circuit voltage (OCV) stabilized, the cells were charged at room temperature (25°C) with a constant current (CC) of 0.1C until the voltage reached 4.4 V. The cells were then charged once at a constant voltage (CV) of 4.4 V until the charge current reached 0.05C, and the initial charge capacity was measured.

The half-coin cells were then left for 10 minutes and discharged once at a constant current of 0.1C until the voltage reached 3.0 V, and the initial discharge capacity was measured.

Then, 50 cycles of CC-CV charging (4.4 V, 0.5C, 0.05C cut-off current) and discharging (1.0 C, 3.0 V) were repeated at 45°C. The capacity retention was evaluated as the percentage of the discharge capacity measured at the 50th cycle divided by the initial discharge capacity at the first cycle.

The results are shown in Table 1.

Experimental Example 2: Evaluation of charge transfer resistance ($R_{CT}$)

The initial charge capacity and initial discharge capacity of the half-coin cell manufactured as described above were measured in the same manner as in Experimental Example 1.

The half-coin cell was then charged at room temperature (25°C) by constant current/constant voltage (CC-CV) charging with a charge voltage of 4.3 V and a charge current of 0.2C. The half-coin cell was charged to 100% state of charge (SOC) (4.3 V) and then the voltage was held. The half-coin cell was then transferred to a low-temperature chamber (-5°C), and an electrochemical impedance spectroscopy spectrum was obtained using an impedance measurement device (Potentiostat, Neoscience). At this time, an AC voltage was applied while changing the frequency from $10^5$ Hz to 0.1 Hz with an amplitude of 10 mV.

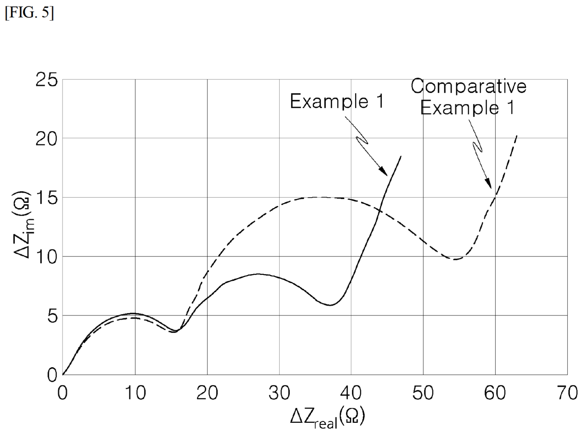

Based on the impedance spectroscopy spectrum, a Nyquist plot was obtained. The Nyquist plot of a half-coin cell including a cathode using the cathode active material prepared according to Example 1 is shown in FIG. 5.

$R_{SEI}$ and $R_{ct}$ were calculated using mathematical fitting for the small and large semicircles on the Nyquist plot. The resistance value obtained from the semicircle generated in the high-frequency region (small semicircle) represents $R_{SEI}$, and the resistance value obtained from the semicircle generated in the low-frequency region (large semicircle) represents $R_{ct}$.

$R_{SEI}$ based on the semicircle generated in the high-frequency region may represent the resistance caused by the solid electrolyte, while $R_{ct}$ based on the semicircle generated in the low-frequency region may represent the charge transfer resistance at the cathode interface.

The results are shown in Table 1 below.

Experimental Example 3: Evaluation of uniformity of coating layer

SEM images were taken of the cathode active materials prepared in Examples 1 to 3 and Comparative Examples 1 to 4 at an acceleration voltage of 10 kV and a magnification of 20,000x using a scanning electron microscope (SEM).

Energy-dispersive spectroscopy (EDS) was used to obtain EDS spectra based on the SEM images under conditions of a pulse throughput of 60 eV/count and a working distance of 10 mm. The average peak intensity and maximum peak intensity of $WO_3$ were calculated by averaging 10 randomly selected points from the spectra and the tungsten peak was normalized to the Pt peak intensity of the Pt coating (2.05 keV).

The results are shown in Table 2 below.

Experimental Example 4: Evaluation of surface residual lithium content

The surface residual lithium content of the cathode active materials prepared in Examples 1 to 3 and Comparative Examples 1 to 4 was measured as follows.

2.5 g of the cathode active material and 100 g of deionized water were placed in a 250 mL flask and stirred at 400 rpm for 10 minutes. The resulting dispersion was filtered using a vacuum flask to obtain 100 g of the filtered dispersion. The filtered dispersion was placed in an auto-titrator and automatically titrated with 0.1 N HCl using the Warder Method. Based on the pH titration graph, the contents of LiOH and $Li_2CO_3$ (ppm) in the dispersion were measured. The sum of the measured LiOH and $Li_2CO_3$ contents was evaluated as the amount of surface residual lithium.

The results are shown in Table 2 below.

Experimental Example 5: Evaluation of lithium metal oxide loss ratio

The lithium metal oxides upon completion of the calcination treatment in Examples 1 to 3 and Comparative Examples 1 to 4 were sieved through a 325-mesh sieve to obtain classified lithium metal oxides.

At this time, the loss ratio (%) of lithium metal oxide was calculated based on the amount of the lithium metal oxide upon completion of the calcination treatment and the amount of lithium metal oxide remaining on the sieve.

The results are shown in Table 2 below.

[TABLE 1]

| | Capacity properties (mAh/g) | Cycle life properties (%) | Electrode EIS | |
|---|---|---|---|---|
| | | | $R_{SEI}$ (Ω) | $R_{CT}$ (Ω) |
| Example 1 | 195.3 | 94.5 | 14.6 | 26.8 |
| Example 2 | 195.5 | 94.0 | 15.2 | 27.4 |
| Example 3 | 195.0 | 93.8 | 15.0 | 27.6 |
| Comparative Example 1 | 188.1 | 85.5 | 15.0 | 41.8 |
| Comparative Example 2 | 190.0 | 91.3 | 15.2 | 31.2 |
| Comparative Example 3 | 191.1 | 90.0 | 15.3 | 32.5 |
| Comparative Example 4 | 195.0 | 80.0 | 14.5 | 34.1 |

[TABLE 2]

| | Coating uniformity (%) | Surface residual lithium (ppm) | | Loss ratio of lithium metal oxide during process (%) |
|---|---|---|---|---|
| | | LiOH | $Li_2CO_3$ | |
| Example 1 | 8.5 | 1800 | 1750 | 0.3 |
| Example 2 | 8.2 | 1920 | 1810 | 0.3 |
| Example 3 | 8.8 | 1850 | 1950 | 0.3 |
| Comparative Example 1 | 18.5 | 4300 | 4100 | 0.1 |
| Comparative Example 2 | 9.5 | 3560 | 3050 | 1.5 |
| Comparative Example 3 | 13.8 | 3710 | 3280 | 2.3 |
| Comparative Example 4 | 8.1 | 1670 | 1500 | 7.5 |

From Tables 1 and 2, the cathode active materials of Examples 1 to 3 exhibited reduced surface damage, sufficient removal of residual lithium, and a more uniform coating. Consequently, the cathode active materials of Examples 1 to 3 had improved electrical conductivity and suppressed side reactions due to residual lithium, resulting in improved capacity and cycle life properties of half-coin cells including cathodes to which these materials were applied. Further, in Examples 1 to 3, the loss ratio of lithium metal oxide was reduced.

The cathode active material of Comparative Example 1 had the highest residual lithium content, resulting in the lowest capacity and cycle life properties of half-coin cells including a cathode to which this material was applied.

The cathode active material of Comparative Example 2 also failed to sufficiently remove residual lithium remaining on its surface, resulting in poor capacity and cycle life properties of half-coin cells using this cathode. Furthermore, the lithium metal oxide loss ratio was increased in Comparative Example 2.

The cathode active material of Comparative Example 3 exhibited surface damage and fine particles. Consequently, the capacity and cycle life properties of half-coin cells including a cathode, to which this material was applied, were poor. In addition, the lithium metal oxide loss ratio was high in Comparative Example 3.

The cathode active material of Comparative Example 4 exhibited the highest level of surface damage caused by liquid water, significant lithium loss within the layered structure, and a high amount of water in the active material. Consequently, the high-temperature capacity retention of half-coin cells including a cathode, to which this material was applied, was the lowest. Further, in Comparative Example 4, the loss ratio of lithium metal oxide was the highest.

**Claims**

1.  A cathode active material for a lithium secondary battery comprising a lithium metal oxide,

    wherein the lithium metal oxide satisfies Equation 1 below:

    $$[\text{Equation 1}]$$

    $$\text{Charge transfer resistance } (R_{CT}) \leq 30 \ \Omega$$

    wherein, in Equation 1, $R_{CT}$ is based on a value measured by an electrochemical impedance spectroscopy (EIS) for a half-coin cell comprising a cathode to which the cathode active material is applied.

2.  The cathode active material for a lithium secondary battery according to claim 1, wherein the cathode active material further comprises a coating layer formed on at least a portion of a surface thereof, and the coating layer comprises an inorganic material comprising at least one of a metal element, a metalloid element, and a non-metal element.

3.  The cathode active material for a lithium secondary battery according to claim 2, wherein the metal element comprises at least one selected from the group consisting of aluminum, tungsten, cobalt, zirconium, molybdenum, niobium, and titanium, the metalloid element comprises boron, and the non-metal element comprises sulfur.

4.  The cathode active material for a lithium secondary battery according to any one of claims 2 and 3, wherein a variation in a content of the inorganic material across an entire region of the coating layer is less than 10%.

5.  A method for preparing a cathode active material for a lithium secondary battery, comprising:

    preparing a preliminary lithium metal oxide; and
    treating the preliminary lithium metal oxide with a flake ice.

6.  The method for preparing a cathode active material for a lithium secondary battery according to claim 5, wherein the preliminary lithium metal oxide is not treated with water or steam.

7.  The method for preparing a cathode active material for a lithium secondary battery according to any one of claims 5 and 6, wherein the flake ice has an average crystal size of 0.05 mm to 0.5 mm.

8.  The method for preparing a cathode active material for a lithium secondary battery according to any one of claims 5 to 7, wherein the treatment with the flake ice is performed using 1 to 3 parts by weight of the flake ice based on 100 parts by weight of the preliminary lithium metal oxide.

9.  The method for preparing a cathode active material for a lithium secondary battery according to any one of claims 5 to 8, wherein the treatment with the flake ice is performed at a temperature range of -35°C to 35°C.

10. The method for preparing a cathode active material for a lithium secondary battery according to any one of claims 5 to 9, wherein the treatment with the flake ice comprises introducing the preliminary lithium metal oxide and the flake ice into a blender, and blending, or
    wherein the treatment with the flake ice comprises introducing the preliminary lithium metal oxide and the inorganic material in a blender and blending, followed by adding the flake ice and blending.

11. The method for preparing a cathode active material for a lithium secondary battery according to claim 10, wherein a blending time from the introduction of the preliminary lithium metal oxide and the inorganic material to the blender prior to the addition of the flake ice.

12. The method for preparing a cathode active material for a lithium secondary battery according to any one of claims 10 and 11, wherein the inorganic material is introduced into the blender in an amount of 1,000 ppm to 9,000 ppm per kg of the preliminary lithium metal oxide.

13. The method for preparing a cathode active material for a lithium secondary battery according to any one of claims 5 to 12, further comprising calcining the treated preliminary lithium metal oxide at least once to obtain a lithium metal oxide.

14. The method for preparing a cathode active material for a lithium secondary battery according to claim 13, wherein a loss ratio (%) of the lithium metal oxide according to Equation 2 below is less than 0.5%:

[Equation 2]

$$\text{Loss ratio (\%)} = \frac{A1 - A2}{A1} \times 100$$

wherein, in Equation 2, AI represents an amount of lithium metal oxide upon completion of the calcination treatment, and A2 represents an amount of lithium metal oxide classified by sieving the lithium metal oxide upon completion of the calcination treatment through a 325-mesh sieve).

15. A lithium secondary battery comprising:

a cathode comprising the cathode active material for a lithium secondary battery according to any one of claims 1 to 4; and
an anode disposed opposite to the cathode.

[FIG. 1]

| Prepare preliminary lithium metal oxide | ~S10 |

↓

| Treat lithium metal oxide with flake ice | ~S20 |

[FIG. 2]

[FIG. 3]

[FIG. 4]

[FIG. 5]